# EUROPEAN PATENT APPLICATION

(11) **EP 2 868 989 A1**
(43) Date of publication of application: **06.05.2015**
(21) Application number: 13190950.9
(22) Date of filing: 30.10.2013
(51) Int. Cl.: F24F 6/14, F24F 11/00, B65B 31/00, A24B 3/04, A24B 9/00

(54) **Apparatus and method for processing consumer goods**

(71) Applicant: Philip Morris Products S.A., 2000 Neuchâtel (CH)
(72) Inventor: Tonegutti, Nicolo, Casalecchio di Reno Bologna 40033 (IT); Ferrazzin, Diego, Castelfranco Emilia Modena 41013 (IT)
(74) Representative: Civera, Andrea

(57) **Abstract**

There is provided an apparatus for processing consumer goods, particularly for manufacturing or packaging components of a tobacco product. The apparatus comprises spraying means for delivering flows of a mixture of gas and liquid into an operative region associated with the apparatus and sensor means for determining an environmental parameter in the operative region. Further, the apparatus comprises a control unit operatively connected to the spraying means and to the sensor means. The control unit is adapted to adjust the flow delivered by the spraying means in response to the environmental parameter determined by the sensor means in the operative region.

## Description

The present invention relates to a method and apparatus for processing consumer goods. In particular, the invention finds application in the manufacturing and packaging of consumer goods, for example tobacco products, such as smoking articles, wherever a relatively fine control of environmental conditions is required.

In order to preserve the characteristics of many components of consumer goods, environmental parameters such as temperature and relative humidity often need to be maintained within predetermined ranges during manufacture. To this purpose, it has previously been proposed to provide manufacturing facilities with dedicated areas within which environmental conditions are controlled. These dedicated areas are typically divisions of a building enclosed by floor, ceiling and walls or partitions to define closed manufacturing spaces, each of which accommodates one or several pieces of machinery. Particular care and predefined procedures are therefore typically necessary to regulate access of operators to the dedicated areas in order to avoid disturbance of the environmental parameters.

Controlled-environment areas are generally quite costly to both set up and maintain. Besides, they may not always be fully compatible with existing production requirements, for example when different operations have to be carried out under different localised environmental conditions. Further, whenever production requirements change, it may be particularly difficult to adapt existing dedicated areas to the revised production requirements. This may occur when new pieces of equipment need to be added to an existing manufacturing facility, for example in order to increase production rates or in view of the introduction of a novel range of products. Furthermore, more stringent environmental constraints may become relevant, for example to account for the use of novel, more sensitive, materials or apparatus.

The need is often felt in the manufacturing and packaging of smoking articles or components thereof to control environmental parameters, such as temperature and relative humidity. By way of example, it is generally preferred to maintain the moisture content of the tobacco material within predetermined ranges.

In general, it would be desirable to provide an apparatus for processing consumer goods capable of ensuring that, in operation, certain relevant environmental parameters are maintained within a predetermined range, whilst being adaptable to changes in the production requirements. Further, it would be desirable to provide a method for processing consumer goods, by which certain relevant environmental parameters are maintained within a predetermined range.

According to the invention there is provided an apparatus for processing consumer goods, wherein the apparatus comprises: spraying means for delivering flows of a mixture of gas and liquid into an operative region associated with the apparatus; sensor means for determining an environmental parameter in the operative region; and a control unit operatively connected to the spraying means and to the sensor means. According to the invention, the control unit is adapted to adjust the flow delivered by the spraying means in response to the environmental parameter determined by the sensor means in the operative region.

In particular, the expression "processing consumer goods" shall be construed as involving the performance of at least an operation on an article of manufacture. By this expression, reference is made, in general, to processes for the production of articles for use from raw or pre-processed materials by giving these materials new forms or properties, typically by machinery. In the present specification, particular reference will be made to the manufacturing and packaging of smoking articles or components thereof. However, this is not intended to limit the scope of protection of the claims, and the apparatus and method disclosed herein may be conveniently used for processing different types of consumer goods, such as for example paper- and cardboard-based materials, fibrous or powdery materials or others.

The term "processing" is used throughout this specification in relation to consumer goods or products to mean the performance of any operation within the framework of an automated manufacturing or packaging process of consumer goods or products or components thereof. With particular reference to the manufacture and packaging of tobacco products, the term "processing" may refer to the manufacture or packaging of cigarettes, filters, or any component thereof, such as tobacco material; additives like herbs or other flavourants, filter segments; accessories like flow restrictors, additive-delivery systems or package blanks.

The expression "operative region associated with a processing apparatus" is used throughout this specification to mean a finite sub-portion of a larger manufacturing space of a facility where consumer goods or products or components thereof are manufactured or packaged by means of a processing apparatus.

In a production facility, a "manufacturing space" is used to mean a division of a building enclosed by floor, ceiling and walls or partitions, and typically accommodates several pieces of equipment. In more detail, throughout this specification, the expression "operative region associated with a processing apparatus" is construed as referring to a finite volume encompassing processing means of the apparatus that are configured to contact, and perform at least an operation on, one or more components of a consumer product, but as not extending to the rest of the manufacturing space within which the apparatus is arranged.

According to the invention, the at least one environmental parameter is thus selectively controlled within the operative region and not in the rest of the manufacturing space surrounding the operative region. This is advantageous because it enables a finer localised control of environmental parameters. Additionally variations of the same environmental parameters in the rest of the manufacturing space immediately surrounding the operative region substantially do not affect the sensitive consumer goods or components. Additionally, other parts of the manufacturing space can be maintained in a similar fashion at differnet environmental parameters, according to the local needs. Further, controlling environmental parameters within a finite sub-portion of a significantly larger manufacturing space is generally easier and more cost-effective.

The operative region may generally encompass only a part of the apparatus. As an alternative, the operative region may encompass substantially the whole apparatus. In particular, the operative region may substantially coincide with the portion of space materially occupied by the apparatus, or extend partly beyond the portion of space directly occupied by the apparatus to include a portion of the productive environment circumscribing the apparatus.

In manufacturing or packaging apparatus, consumer goods or products or components thereof are typically conveyed from an input station to an output station along a predetermined path. As they travel along this path, the consumer goods or products or components thereof typically pass through one or more operating stations that form part of the apparatus, each station comprising means for performing one or more manufacturing or packaging operation. In general, the operative region shall encompass all the portions of the apparatus that the sensitive consumer products or components thereof pass through during the manufacturing or packaging process. In particular, the operative region shall preferably encompass the various operating stations of the apparatus with which the sensitive consumer products or components thereof come into contact and the path along which they travel between the input and output stations.

In some embodiments of the present invention, the operative region is the portion of space within from about 30 cm to about 3 m of the processing means. Preferably, the operative region is the portion of space within from about 20 cm to about 2 m of the processing means. The operative space may be extending in one or all of the three dimensions differently. Preferably, the extent ot the operative space into the vertical dimension is smaller than in the two horizontal dimensions.

In an embodiment of the invention, the operative region may encompass a sub-unit of a filter-making machine configured to receive and perform an operation on an object, such as a flow restrictor, flavourant capsule, sorbent particulate material or the like to be incorporated into a filter for a smoking article.

It should be noted that commonly, in a manufacturing facility, certain sensitive materials shall be seamlessly moved from one environmentally controlled operative region to another, which may advantageously be provided by a plurality of apparatuses according to the invention. Accordingly, it is advantageously possible to ensure that the sensitive materials are exposed to tailored environmental conditions between their insertion into the production line and their storage in finished products or parts thereof. Along the production line, the tailored environmental conditions may be similar or may be different, according to need. For example, the required relative humidity may be different in one area of the manufacturing equipment than in another area.

The term "environmental parameter" is used throughout this specification to mean a physical or chemical parameter characterising the environment to which the consumer goods or products or components thereof are exposed to while being subjected to an operation in a manufacturing or packaging facility. In general, the performance of the operation or the characteristics of the components or even of the finished consumer product may be affected by the environmental parameter. For example, relevant environmental parameters include, but are not limited to, temperature, relative humidity, dew point temperature, concentration of a given species, thermal or electric conductivity.

The term "adjusting the flow" is used throughout this specification to mean varying the flow-rate supplied by a spraying means between a null flow-rate and a full flow-rate. In other words, the term "adjusting the flow" is construed as encompassing activating an idle spraying means, shutting off an active spraying means, as well as increasing or decreasing the flow-rate already being supplied by an active spraying means to a different, non-null value.

According to the invention, in an apparatus processing components of consumer goods, a controlled flow of a mixture of gas and liquid, for example a mixture of finely dispersed water in air, is supplied into an operative region of the apparatus, within which a step in a process for manufacturing or packaging consumer goods is carried out. In particular, the apparatus comprises a control unit configured as a feedback control system, that is a control unit programmed to adjust the flow of the mixture of gas and liquid in response to the measured value of a relevant environmental parameter. A relevant environmental parameter is a parameter that may affect the accuracy and efficiency of execution of the operation or the characteristics of the component or of the finished consumer product. Accordingly, the relevant environmental parameter may advantageously be maintained within a predetermined range that is fully compatible with the desired accuracy and efficiency of execution of the operation and which is adapted to preserve the characteristics of the component or product.

In some embodiments, relative humidity may be advantageously controlled in specific parts of a machine configured to handle moisture-sensitive materials or components. In a preferred embodiment, relative humidity may be advantageously controlled in regions of the equipment performing operations on tobacco material. In an alternative embodiment, relative humidity may be advantageously controlled in regions of the equipment performing operations on additives such as flavourants (for example menthol) or on additive-releasing devices (for example capsules) to be incorporated into a filter. In a particularly preferred embodiment, in a filter-making machine, relative humidity may advantageously be controlled in the capsule reservoir (if present) or in the rod forming zone. The crushing force needed to crush a capsule may for example depend on the moisture content of the capsule material. For example, a capsule may become brittle if the moisture level becomes too low and may inadvertently break during the handling of the capsule. Accordingly, with the invention, this can be prevented in the area where a more flexible capsule material is required, for example in a hopper. On the other hand, it may be advantageous that the capsule once processed, for example by placement into a filter rod, becomes more brittle in order for a consumer to crush it easier. Therefore, according to the invention, the environmental parameter of, for example, moisture can be accordingly controlled by adapting the moisture level locally to a tailored moisture range.

In another preferred embodiment, relative humidity may advantageously be controlled in regions of the equipment performing operations on the packaging material, especially cardboard-based packaging material. Preferably, similar values of relative humidity may be maintained both at the printer and at the packing machine. This can advantageously prevent the curling of the material may occur, which may impact the operative speed or uptime of the packing machine.

Because the flow of gas and liquid is controlled based on the measured value of a relevant environmental parameter, the apparatus may easily be customised so as to adapt to the requirements of specific operations in the manufacturing or packaging process, or in different areas of a manufacturing or packaging facility. Further, because variations and oscillations of the value of the environmental parameter outside of the operative region are rendered substantially irrelevant, partitions or separation walls are not needed with the apparatus of the invention. In general, advantageously a more efficient use may be made of the space available within the manufacturing facility, because there is no need for enclosed areas materially separating pieces of equipment and, correspondingly, functionally separating the respective steps in the overall manufacturing process. Costs for managing the manufacturing facility may therefore be conveniently reduced.

The apparatus comprises spraying means for delivering flows of a mixture of gas and liquid into the operative region. Accordingly, there is advantageously no need to provide lateral protection in the form of walls, partitions or the like.

Each of the one or more spraying devices may preferably be associated with a portion of the operative region. In other words, each of the one or more spraying devices may be configured to direct the respective flow into a corresponding portion of the operative region. In practice, each of the one or more spraying devices may be arranged in, or proximate to, a portion of the operative region. This advantageously allows for a finely localised control of the environmental parameter.

The different portions of the operative regions may partly overlap. Thus, a particularly accurate and homogeneous coverage of the whole of the operative region may be achieved. This advantageously helps maintain the environmental parameter at about the same value all across the operative region.

The spraying means may comprise one or more spraying devices, preferably of the type comprising one or more ultra-fine spray-jetting nozzles, particularly binary-fluid nozzles adapted to provide a fog-like mixture comprising ultra-fine liquid particles having an average diameter of several micrometres dispersed in a gaseous phase. For example, AKIMist® humidifiers manufactured by Ikeuchi & co., LTD (Osaka, Japan) may be used.

Preferably, the spraying means are configured to deliver respective flows of a mixture of air and water wherein water is in the form of particles having an average diameter of less than 15 µm and a maximum diameter of less than 75 micrometres. Even more preferably, the spraying means are configured to deliver respective flows of a mixture of air and water wherein water is in the form of particles having an average diameter of less than 10 micrometres and a maximum diameter of less than 50 micrometres. By operating within these ranges, "dry fog" is jetted from a nozzle, that is a fog that does not feel wet to the touch, and which has been found to particularly appropriate for use within the context of the present invention.

Each spraying device may have one or more nozzles to direct the flow of the mixture of gas and liquid along predetermined directions. The number of nozzles of each spraying device may generally be selected in view of the characteristics of the productive environment in the manufacturing or packaging facility, for example to account for airflow, general heating sources, conditioning units and the like.

In preferred embodiments, the spraying means are in fluidic connection with a source of gas and with a source of a liquid. The gas may preferably be compressed air. However, other gases may be used, such as nitrogen, oxygen, or gaseous mixtures. The liquid may preferably be water. However, other liquids may be used. In particular, aqueous solutions containing a detergent, a fungicide or other sanitising or disinfecting agent may be advantageously used.

Preferably, when the liquid is water or an aqueous based solution, spraying means are in fluidic connection with a source of purified water, so that the formation of limestone deposits in the nozzles may be prevented and maintenance costs of the apparatus may be advantageously reduced. For example, a reverse osmosis purification kit may be used. In addition, or as an alternative, other types of filters may be used. Preferably, spraying means are in fluidic connection with a source of water having a hardness of less than 50 mg CaCO₃ (calcium carbonate) per litre.

The apparatus further comprises sensor means for detecting and measuring a relevant parameter in the operative region, and a control unit that is programmed and configured to adjust the flow of gas and liquid delivered by the spraying means in response to a value of the relevant parameter measured in the operative region. In practice, the control unit is configured as a closed loop control system, whereby the current output, that is the measured value of the relevant environmental parameter, is taken into consideration and corrections to the flow of gas and liquid are made based on the feedback received from the sensor means.

The sensor means may comprise one or more sensors adapted to detect and measure one or any environmental parameter such as for example humidity, temperature, movement or air pressure. In some embodiments, the sensor means may comprise at least a first and a second sensor, wherein each of the at least a first and a second sensor are adapted to detect and measure a different environmental parameter, for example relative humidity and temperature, or air pressure and temperature. The measurements obtained from the first and second sensors may be combined and elaborated to provide a signal that is representative of the operating conditions in the operative region. Accordingly, the control unit may be programmed to implement a more complex control strategy to maintain the operating conditions in the operative region within desired ranges.

Further, the sensor means may comprise a plurality of sensors configured to detect and measure the same environmental parameter, each sensor being arranged in, and operatively associated with, a portion of the operative region. In practice, the operative region may be divided in a number of sub-regions, a sensor being arranged in each sub-region to detect a local value of the environmental parameter. Thus, even small, localised variations or oscillations in a relevant parameter may be detected and controlled.

In some embodiments, the control unit may be programmed and configured to adjust the flow of a spraying device based on the value of the environmental parameter measured by a single sensor. In other embodiments, the control unit may be programmed and configured to adjust the flow of a spraying device based on a signal based on the values of the environmental parameter measured by at least two sensors in the plurality of sensors.

Preferably, where the spraying means comprise two or more spraying devices, the control unit is programmed and configured to individually adjust the flow delivered by each of the two or more spraying devices independently from each other. Accordingly, depending on the relative spatial arrangement of the two or more spraying devices, as well as on the spatial arrangement of the two or more spraying devices within, or relative to, the operative region the flow of gas and liquid may be dosed and targeted with particular accuracy.

The control unit may, in particular, be programmed to maintain a relevant environmental parameter within a desired range. For example, the control unit may be programmed to maintain the value of relative humidity in the operative region between 20 percent and 90 percent. Preferably, the control unit may be programmed to maintain the value of relative humidity in the operative region between 50 percent and 70 percent.

The control unit may further be programmed to shut the apparatus down altogether if the relevant environmental parameter is detected to fall outside of a predetermined range for longer than a given time limit. Accordingly, operation of a production line may be temporarily interrupted, for example for a maintenance intervention, and the undesired environmental conditions are prevented from possibly affecting the consumer goods or product or components thereof being processed by the apparatus. According to the invention, the sensor means may also comprise additional sensors that are adapted to detecting environmental influences like for example the presence of an operator, for example as a source of heat and moisture or a constant air current, for example due to open windows or air conditioning systems operated in the same manufacturing space. Accordingly, prefereably, the control unit may be adapted to control the environmental parameters based on one or more other environmental influences.

Preferably, the control unit comprises a graphical user interface that allows a machine operator to interact with the control unit, for example to read out the environmental parameters either in numerical form or in a graphical representation or a combination of numerical and graphical form, set target ranges for environmental parameters or read out status information of the sensors.

According to another aspect of the invention there is further provided a method for processing consumer goods, wherein an operation is performed on at least a component of the consumer goods by a processing apparatus, the method comprising: delivering an adjustable flow of a mixture of a gas and a liquid into an operative region associated with the processing machine; determining an environmental parameter in the operative region; and adjusting the flow delivered into the operative region in response to the environmental parameter determined in the operative region. Features described in relation to one aspect of the invention may also be applicable to another aspect of the invention.

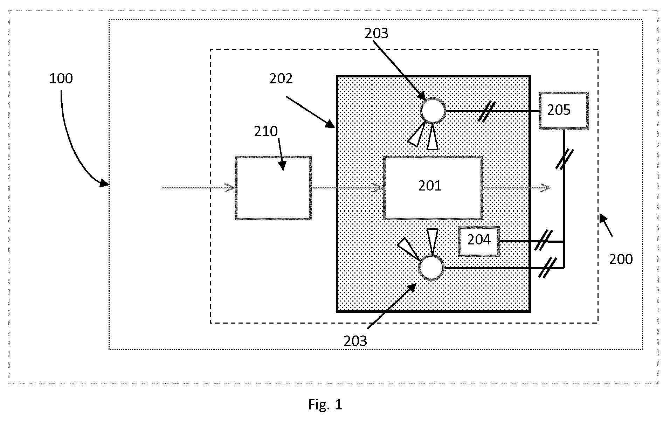

The invention will be further described, by way of example only, with reference to the accompanying Figure 1, which is a schematic representation of an apparatus for processing consumer goods according to the present invention.

Figure 1 illustrates schematically a productive environment 100 of a facility where consumer goods are manufactured or packaged. The productive environment 100 accommodates an apparatus 200 for processing consumer goods. The apparatus 200 comprises processing means 201, 210 for performing operations on a component of a consumer product. The component is received at an input station of the apparatus 200, is conveyed along a component path across the processing means 201, 210 and is delivered at an output station of the apparatus 200. For example, processing means 201 include a sub-unit of a filter-making machine where an object, such as a capsule, is incorporated into a filter for a smoking article.

The apparatus 200 comprises spraying means 203 configured to direct respective flows of a mixture of water and air into an operative region 202 of the apparatus 200. The operative region 202 encompasses only a part of the apparatus 200. In particular, the operative region 202 encompasses processing means 201 and a portion of the immediately surrounding space.

Further, the apparatus 200 comprises a sensor means 204, which is arranged in the vicinity of the processing means 201 and is configured to detect and measure an instant value of relative humidity within the operative region 202. The apparatus 200 also comprises a control unit 205 connected to the spraying means 203 and the sensor means 204. The control unit 205 adjusts the flow of water and air delivered by the spraying means 203 into the operative region 202. In particular, the control unit 205 is configured to adjust the flow of water and air delivered by the spraying means to maintain the relative humidity within the operative region 202 from about 50 percent to about 70 percent.

It will be appreciated by the skilled person that an additional operative region may be defined that encompasses the processing means 210. The apparatus 200 may, accordingly, comprise further spraying means configured to direct a flow of water and air into the additional operative region. The control unit 205 may be configured to adjust the flow of water and air delivered by the further spraying means independently from the flow of the spraying means 203, so as to maintain the relative humidity in the additional operative region within the same range mentioned above for the operative region 202. As an alternative, the control unit 205 may be configured to adjust the flow of water and air delivered by the further spraying means so as to maintain the relative humidity in the additional operative region within a second, different range. The second, different range may partly overlap the relative humidity range of the operative region 202.

## Claims

1. Apparatus for processing consumer goods, wherein the apparatus comprises:
spraying means for delivering flows of a mixture of gas and liquid into an operative region associated with the apparatus;
sensor means for determining an environmental parameter in the operative region;
a control unit operatively connected to the spraying means and to the sensor means, and wherein the control unit is adapted to adjust the flow delivered by the spraying means in response to the environmental parameter determined by the sensor means in the operative region.

2. Apparatus according to claim 1, wherein the apparatus comprises processing means for performing an operation on at least a component of the consumer goods and the operative region is the portion of space within from about 30 cm to about 3 m of the processing means.

3. Apparatus according to claim 1 or 2, wherein the apparatus is configured for manufacturing or packaging at least a component of a tobacco product.

4. Apparatus according to claim 3, wherein the tobacco product is a smoking article.

5. Apparatus according any one of the preceding claims, wherein the environmental parameter is relative humidity.

6. Apparatus according to claim 5, wherein the control unit is programmed to maintain the value of relative humidity measured in the operative region in the range of 50 percent to 70 percent.

7. Apparatus according to any one of the preceding claims, wherein the spraying means is configured to deliver flow of a mixture of air and water wherein water is in the form of particles having an average diameter of less than 15 micrometres and a maximum diameter of less than 75 micrometres.

8. Apparatus according to any one of the preceding claims, wherein the spraying means is in fluidic connection with a source of compressed air and with a source of purified water, and comprises one or more nozzles for directing adjustable flows of the mixture of air and water along respective directions into the operative region.

9. Apparatus according to any one of the preceding claims, wherein the spraying means are each associated with at least a portion of the operative region and arranged to direct the flows of the mixture of gas and liquid into the respective associated portion of the operative region.

10. Apparatus according to any one of the preceding claims, wherein the spraying means comprise two or more spraying devices and wherein the control unit is programmed to individually adjust the flow delivered by each of the two or more spraying devices independently.

11. A method for processing consumer goods, wherein an operation is performed on at least a component of the consumer goods by a processing apparatus, the method comprising:
delivering one ore more adjustable flows of a mixture of a gas and a liquid into an operative region associated with the processing machine;
determining a value of an environmental parameter in the operative region; and
adjusting the flow delivered into the operative region in response to the value of the environmental parameter determined in the operative region.

12. A method according to claim 11, wherein the apparatus comprises processing means for performing an operation on the component and the operative region is the portion of space within from about 20 cm to about 2 m of the processing means.

13. A method according to claim 11 or 12, wherein the component is a component of a tobacco product.

14. A method according to any one of claims 11 to 13, wherein each of the one or more flows is adjusted independently.

15. A method according to any one of claims 11 to 14, wherein each of the one or more flows is adjusted in response to a environmental parameter determined in a respective associated portion of the operative region.
